# EUROPEAN PATENT APPLICATION

(11) **EP 4 620 601 A1**
(43) Date of publication of application: **24.09.2025**
(21) Application number: 25157598.1
(22) Date of filing: 13.02.2025
(51) Int. Cl.: B23B 27/04, B23B 27/14

(54) **CUTTING TOOL**

(30) Priority: 27.02.2024 JP 2024027162; 26.12.2024 JP 2024229632
(71) Applicant: Tungaloy Corporation, Iwaki-shi, Fukushima 970-1144 (JP)
(72) Inventor: FUJITA, Kento, Fukushima, 9701144 (JP); SASAKI, Yasutake, Fukushima, 9701144 (JP)
(74) Representative: Vossius & Partner Patentanwälte Rechtsanwälte mbB

(57) **Abstract**

A cutting tool includes an upper surface, a flank, and a cutting edge formed on an edge between the upper surface and the flank, the cutting tool having a shape extending in a longitudinal direction along a longitudinal reference axis from a base end part to a leading end part, the cutting tool having the cutting edge member at the leading end part, in which the cutting tool is provided with a chip discharge groove that is constituted by a wall surface at least part of which is curved and at least part of which is located at a position higher than the cutting edge, in which the chip discharge groove has a shape extending in a direction different from an axial direction of the longitudinal reference axis.

## Description

### Background

### Field

The present invention relates to a cutting tool.

### Description of Related Art

Various cutting tools have conventionally been proposed as cutting tools for parting or groove machining (see, for example, JPH08-300202 A, JP6976522 B and WO2015/098917). In addition, as a cutting tool for a turning process, a cutting insert configured so as to be suitable for groove machining for an aluminum material has also been proposed, and such cutting tool is formed by applying an ultrahigh-pressure sintered body, such as a PCD (diamond sintered body), to a cutting edge member and brazing such ultrahigh-pressure sintered body to a base insert formed of an ultrahard substrate (see, for example, JP2017-196693 A).

Regarding the chip control in a cutting process using the latter-mentioned cutting insert, various approaches to improve such chip control have conventionally been proposed. One of such approaches is to employ a cutting insert having an ultrahigh-pressure sintered body provided with a chip breaker for improving the chip control.

However, in the above-described conventional cutting insert, when, for example, a groove is machined in a workpiece at a position close to a chuck, chips may contact the chuck, which may cause the chips to be entangled with the chuck or parts therearound . In such case, an attempt to remove such entangled chips may decrease the production efficiency. One of the solutions to stabilize the chip control is to decrease the feed speed; however, such decrease in the feed speed will cause longer time to be taken to perform machining, which also leads to a decrease in the production efficiency.

In addition, in typical NC lathes, a chuck for a workpiece is located on the left side in a plan view, whereas the right side provides a free end (or a tailstock) and thus has a large space for discharging chips. In such case, it can be said that it is desirable for the chips to be guided toward the opposite side of the chuck.

### Summary

Under the above circumstances, an object of the present invention is to provide a cutting tool capable of improving the discharging efficiency for chips, and thereby improving the production efficiency.

An aspect of the present invention provides a cutting tool that includes an upper surface, a flank, and a cutting edge formed on an edge between the upper surface and the flank, the cutting tool having a shape extending in a longitudinal direction along a longitudinal reference axis from a base end part to a leading end part, the cutting tool having the cutting edge member at the leading end part, in which the cutting tool is provided with a chip discharge groove that is constituted by a wall surface at least part of which is curved and at least part of which is located at a position higher than the cutting edge, the chip discharge groove having a shape extending in a direction different from an axial direction of the longitudinal reference axis.

According to the cutting tool in the above-described aspect, the chip discharge groove including a wall surface that is located at a position higher than the cutting edge can securely guide and discharge chips in a direction different from the axial direction of the longitudinal reference axis, so that the chips will not be entangled with a workpiece, etc. Such cutting tool makes it possible to improve production efficiency.

In the cutting tool described above, a virtual center line passing through a center of the chip discharge groove may be inclined with respect to the longitudinal reference axis in a plan view where the chip discharge groove is viewed in a direction perpendicular to the longitudinal reference axis from the side of the upper surface.

In the cutting tool described above, an intersection between the virtual center line passing through the center of the chip discharge groove and the longitudinal reference axis may be located on a base end part side with respect to the cutting edge in the plan view where the chip discharge groove is viewed in the direction perpendicular to the longitudinal reference axis from the side of the upper surface.

In the cutting tool described above, the chip discharge groove may be bilaterally asymmetric with respect to the longitudinal reference axis in the plan view where the chip discharge groove is viewed in the direction perpendicular to the longitudinal reference axis from the side of the upper surface.

In the cutting tool described above, the chip discharge groove may be formed so as to span the center in a width direction of the cutting tool in the plan view where the chip discharge groove is viewed in the direction perpendicular to the longitudinal reference axis from the side of the upper surface.

In the cutting tool described above, the wall surface that forms the chip discharge groove may be constituted only by a curved surface.

In the cutting tool described above, at least part of the wall surface that forms the chip discharge groove may be constituted by a cylindrical surface.

In the cutting tool described above, the wall surface that forms the chip discharge groove may be constituted by a cylindrical surface.

A cutting tool according to another aspect of the present invention includes: a cutting edge member having a first end surface, a second end surface that opposes the first end surface, a flank, and a cutting edge formed on an edge between the first end surface and the flank; and a base member having a shape extending in a longitudinal direction along a longitudinal reference axis from a base end part to a leading end part, in which the cutting edge member is joined to the leading end part, in which the base member is provided with a chip discharge groove that is constituted by a wall surface at least part of which is curved and at least part of which is located at a position higher than the first end surface, in which the chip discharge groove has a shape extending in a direction different from an axial direction of the longitudinal reference axis of the base member.

According to the cutting tool in the above-described aspect, the chip discharge groove including a wall surface that is located at a position higher than the upper surface of the cutting edge member can securely discharge chips in a direction different from the axial direction of the longitudinal reference axis of the base member, so that the chips will not be entangled with a workpiece. Such cutting tool achieves stable chip control even during high-feed machining. Such configuration makes it possible to improve the flexibility in feeding during cutting, and thereby improve production efficiency.

In the cutting tool described above, a starting end of the chip discharge groove may be arranged on a base end-side portion of the cutting edge member.

In the cutting tool described above, the chip discharge groove may be bilaterally asymmetric with respect to the longitudinal reference axis of the base member in a plan view where the chip discharge groove is viewed in a direction perpendicular to the longitudinal reference axis from the side of the first end surface.

In the cutting tool described above, the chip discharge groove may be formed so as to span the center in a width direction of the base member in the plan view where the chip discharge groove is viewed in the direction perpendicular to the longitudinal reference axis from the side of the first end surface.

In the cutting tool described above, an intersection between the virtual center line passing through the center of the chip discharge groove and the longitudinal reference axis may be located on a leading end part side with respect to a base end-side portion of the cutting edge member in the plan view where the chip discharge groove is viewed in the direction perpendicular to the longitudinal reference axis from the side of the first end surface.

In the cutting tool described above, the cutting edge member may be joined to the base member such that the cutting edge member is inclined with a base end side thereof descended with respect to a leading end side thereof.

In the cutting tool described above, the cutting edge member may be an ultrahigh-pressure sintered body.

### Brief Description of Drawings

Fig. 1 is a perspective view showing a cutting tool according to a first embodiment of the present invention.
Fig. 2 is a plan view of the cutting tool.
Fig. 3 is a right-side view of the cutting tool.
Fig. 4 is a perspective view showing a configuration example of a cutting edge member and a base insert.
Fig. 5 is a plan view showing a configuration example of the cutting edge member and the base insert.
Fig. 6A is a side view showing a state in which the cutting edge member is joined to the base insert so as to be inclined with a base end side thereof being descended with respect to a leading end side thereof, and Fig. 6B is a side view showing a state in which the cutting edge member is joined to the base insert in an uninclined state.
Fig. 7 is a perspective view showing a cutting tool according to a second embodiment of the present invention.
Fig. 8 is a right-side view of the cutting tool.
Fig. 9 is a plan view of the cutting tool
Fig. 10A is an image showing chips generated as a result of a cutting process using the cutting tool according to the present invention, and Fig. 10B is an image showing chips generated as a result of a cutting process using a conventional cutting tool.

### Detailed Description

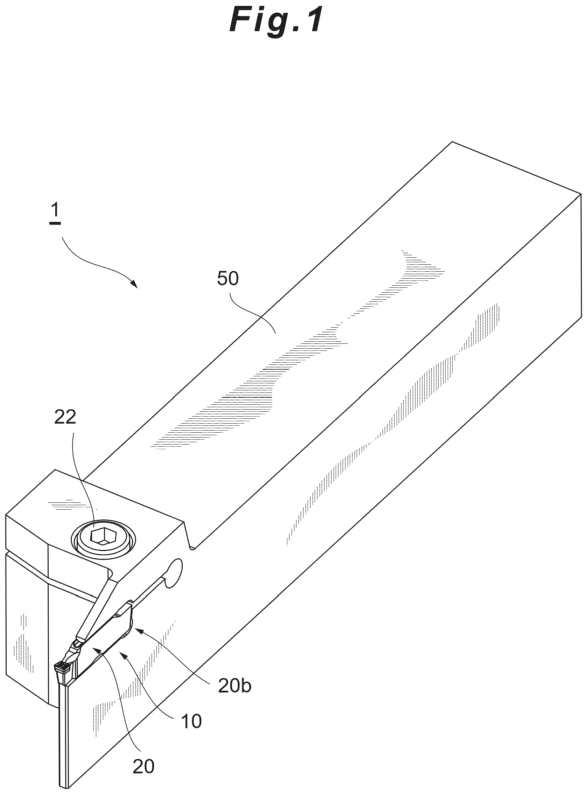

Now, preferred embodiments of a cutting tool according to the present invention will be described in detail below, with reference to the attached drawings (see Fig. 1).

### [First Embodiment]

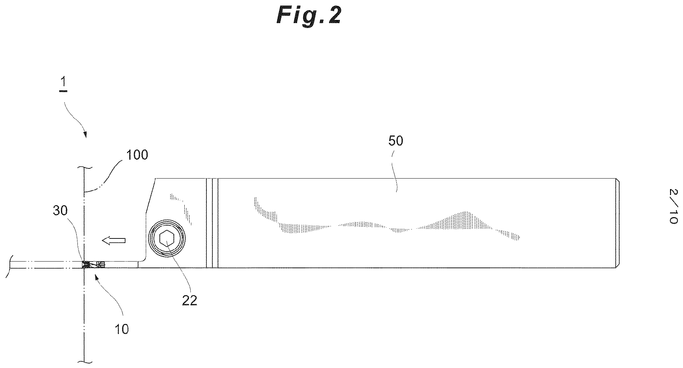

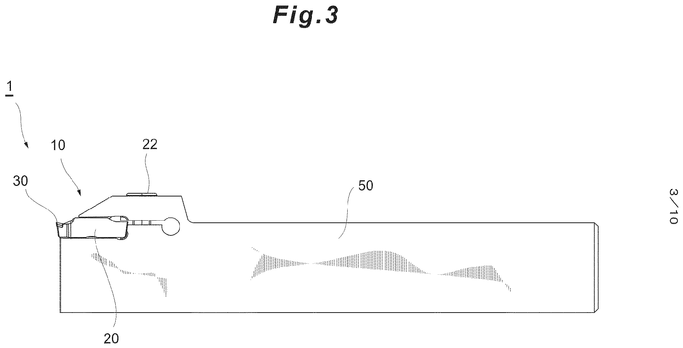

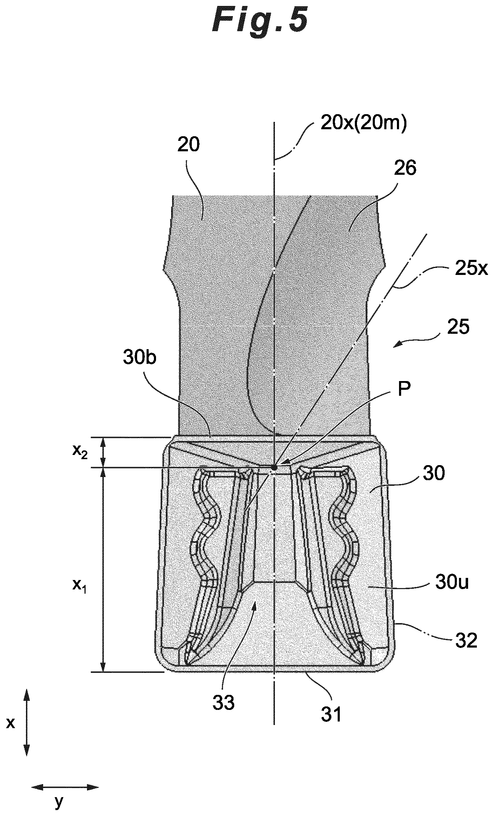

A cutting tool 1 according to the present embodiment includes a cutting insert 10 and a tool holder 50 that holds the cutting insert 10 (see Figs. 1-3). The cutting inset 10 is configured so as to be suitable for groove machining for, in particular, aluminum materials, and the cutting insert 10 is formed by joining, to a base insert 20 which serves as a substrate made of a superalloy, a cutting edge member 30 that is made of an ultrahigh-pressure sintered body having a higher hardness than the base insert 20, by means of, for example, brazing. Preferred examples of the ultrahigh-pressure sintered body may include PCD (diamond sintered body). The cutting insert 10 having such configuration has an extremely high abrasion resistance, and can therefore be used for cutting various types of metal materials such as cast iron, a high-hardness metal material, and a non-ferrous alloy of aluminum, etc., and the like. The cutting insert 10 is mounted on the tool holder 50, and fed in a grooving direction during groove machining so as to be used to cut a workpiece (work material) 100 (see Fig. 2). The axis located substantially at the center of the base insert 20 that extends along the grooving direction from a base end part 20b to a leading end part 20t is referred to as a longitudinal reference axis and denoted by a reference symbol 20x in the present embodiment (see Fig. 5). Alternatively, in a plan view (as viewed from the side of an upper surface 30u of a cutting edge member 30 (described later)), an axis extending along the longitudinal direction of a substrate 20' (described later) that corresponds to the base insert, an axis extending along the longitudinal direction of the cutting insert 10, or an axis extending along the longitudinal direction of the cutting tool 1 itself, may each be referred to as the longitudinal reference axis.

### [Cutting edge member]

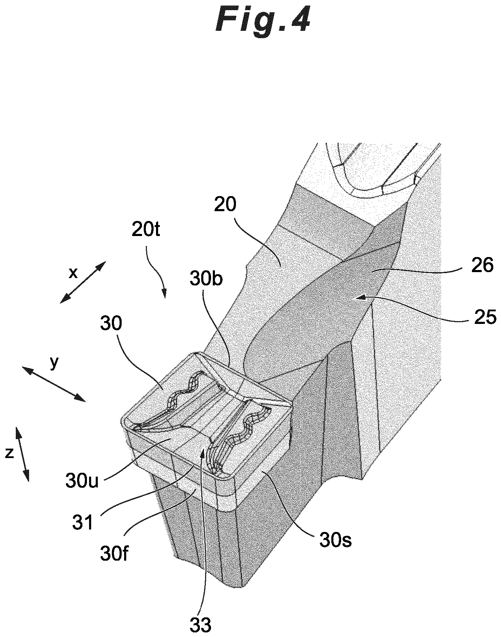

The cutting edge member 30 is made of an ultrahigh-pressure sintered body formed in a prismatic shape having a longitudinal direction x extending in the grooving direction, a width direction y perpendicular to the longitudinal direction x and extending along a front cutting edge 31, and a vertical direction z perpendicular to each of the longitudinal direction x and the width direction y (see Figs. 4 and 5). The cutting edge member 30 has an upper surface (first end surface) 30u and a lower surface (second end surface) 30d serving as a mounting surface with respect to the base insert 20, and the upper surface 30u and the lower surface 30d are each formed in a substantially trapezoidal shape (see Fig. 5). A peripheral side surface 30s is formed between the upper surface 30u and the lower surface 30d (see Fig. 4, etc.). The cutting edge member 30 thus configured is provided with a cutting edge (front cutting edge 31), a recessed part 33, etc. (see Fig. 4, etc.). The recessed part 33 may be provided in more than one location. If lateral feed machining is assumed to be performed by feeding the cutting tool 1 in a lateral feeding direction, the cutting edge member 30 may be provided with a side cutting edge 32 on one or both sides thereof.

The cutting edge includes the front cutting edge 31 formed on an intersecting edge between the peripheral side surface 30s and the upper surface 30u of the cutting edge member 30. When the side cutting edge 32 is formed as described above, the side cutting edge 32 would also be included in the cutting edge. The front cutting edge 31 is formed on an intersecting edge between a front surface 30f, which is a leading-end-side surface in the longitudinal direction x and serves as a flank (the front surface 30f is a part of the peripheral side surface 30s) and the upper surface 30u, and the front cutting edge 31 is used when groove machining is performed on the workpiece 100. The front cutting edge 31 in the present embodiment is formed perpendicular to the longitudinal direction x of the cutting edge member 30. Although not particularly shown in the drawings, a recessed part including a rake surface may be provided in the vicinity of the front cutting edge 31. In the cutting tool 1 of the present embodiment, a portion between the front cutting edge 31 and a wall surface of a chip breaker (in the case of the present embodiment, a recessed part 33 (described later) or its wall surface) functions as a rake surface.

The recessed part 33 is formed on the upper surface 30u at a position on the rear side of the front cutting edge 31 in the longitudinal direction x (see Figs. 4 and 5). The recessed part 33 in the cutting edge member 30 of the present embodiment is configured such that it may function as a chip breaker that breaks chips 101.

### [Base Insert]

The base insert 20 is a member for holding the cutting edge member 30 joined thereto by brazing and is formed of a cemented carbide or the like. The base insert 20 is mounted on the tool holder 50 in a state in which the front surface 30f of the cutting edge member 30 faces a leading end side in the longitudinal direction of the tool holder 50 by, for example, screwing using a screw 22 (see Figs. 1-3).

The base insert 20 is provided with a chip discharge groove 25 having a shape suitable for: securely discharging chips 101 that are generated during a cutting process in a direction that does not cause the chips 101 to be entangled with the workpiece 100; and, in some cases, appropriately curling the chips 101 (see Figs. 4 and 5). The chip discharge groove 25 is constituted by a wall surface 26 at least a portion of which is curved, and at least a portion of which is located at a position higher than the upper surface 30u of the cutting edge member 30 along the vertical direction z. As an example of the size of the curved portion, the radius of curvature R thereof may be, for example, about 1 mm, which is merely a preferred example, as a matter of course.

The chip discharge groove 25 of the present embodiment has a shape in which a starting end 25s thereof is arranged on a base end-side portion 30b of the cutting edge member 30. The base end-side portion of the cutting edge member 30 herein refers to a portion of the cutting edge member 30 where a surface (rear surface) opposite to the front surface 30f is located. Due to the shape of the chip discharge groove 25 extending from the base end-side portion 30b, the chips 101 generated by the front cutting edge 31 can easily be introduced into the chip discharge groove 25.

The chip discharge groove 25 of the present embodiment has a bilaterally asymmetrical shape with respect to the longitudinal reference axis 20x, when the cutting insert 10 is viewed from the upper surface 30u side in the direction perpendicular to the longitudinal reference axis 20x (which is referred to as a "plan view" in this specification). In addition, the chip discharge groove 25 is sized and shaped so as to span the center 20m in the width direction y of the base insert 20 in the plan view (see Fig. 5). Since the longitudinal reference axis 20x shown in Fig. 5 passes the center in the width direction y of the base insert 20, it coincides with the center 20m in the plan view (see Fig. 5).

The chip discharge groove 25 has a shape that extends in a direction different from the axial direction of the longitudinal reference axis 20x of the base insert 20 (see Fig. 5). As an example, the chip discharge groove 25 of the present embodiment is formed so as to extend in a direction that is inclined with respect to the longitudinal reference direction 20x by, for example, 30° in a clockwise direction in the plan view (see Figs. 4 and 5). In other words, assuming that there is a virtual center line 25x of the chip discharge groove 25 that extends in a direction different from the axial direction of the longitudinal reference axis 20x, such center line 25x is inclined with respect to the longitudinal reference axis 20x in the plan view (see Fig. 5). Here, if the chip discharge groove 25 has a cylindrical shape or a conical shape, the center line 25x thereof would coincide with an axis passing the center of such shape, or if the chip discharge groove 25 is curved, the center line would be an axis curved along the virtual center thereof. A preferred example of the degree of inclination of such chip discharge groove 25 in the plan view may be explained by employing, for example, the position of an intersection P between the longitudinal reference axis 20x and the central axis 25x, as a parameter. More specifically, it is preferable for the intersection P to be located at a position away from the front cutting edge 31 of the cutting edge member 30 toward the base end part 20b side by a distance x₁ in the plan view, while it is preferable for the intersection P to be located at a position away from the base end-side portion 30b of the cutting edge member 30 toward the leading end part 20t side by a distance x₂ in the plan view (see Fig. 5). With the intersection P located within such range, it can be said that the chip discharge groove 25 is inclined to the extent that the chips 101 can be securely discharged in a direction that can prevent such chips 101 from being entangled with the workpiece 100 (see Fig. 4, etc.).

### [Tool Holder]

The tool holder 50 is a body part of a cutting tool that holds the cutting insert 10 at a leading end portion thereof, and the tool holder 50 may be provided so as to be feedable in the grooving direction, etc. by, for example, a lathe (not shown) (see Fig. 1, etc.).

### [Mode of Use]

The cutting insert 10 having the above-described configuration in the present embodiment is mounted on the tool holder 50 and pressed against a rotating workpiece 100 in order to cut such workpiece 100. In fact, the cutting insert 10 is first fed in the grooving direction along the longitudinal direction x of the base insert 20 to perform groove machining (see Fig. 2). The cutting insert 10 according to the present embodiment makes it possible to perform parting, in addition to the above-described groove machining, and also makes it possible to perform turning (lathe machining) using the side cutting edge 32.

### [Chip Control]

According to the cutting insert 10 of the present embodiment in which the chip discharge groove 25 is formed in the base insert 20 as described above, when the front cutting edge 31 bites the workpiece 100, the chips 101 are controlled by the recessed part 33 of the cutting edge member 30 so as to be guided toward the wall surface 26 of the chip discharge groove 25 of the base insert 20. The chips 101 that have been curled by the recessed part 33 are then guided by the wall surface 26 so as to change its flowing direction, and are then discharged. In typical NC lathes, a chuck for a workpiece 100 is located on the left side in a plan view, whereas the right side provides a free end (or a tailstock) and thus has a large space for discharging the chips 101. In this regard, the cutting insert 10 illustrated in the present embodiment has a structure in which the chip discharge groove 25 and the wall surface 26 thereof are inclined in the clockwise direction with respect to the longitudinal reference axis 20x in a plan view, so that chips 101 are discharged on the right side, which is suitable for preventing the chips 101 from becoming entangled with the workpiece 100 or the machine tool (see Fig. 5, etc.). Needless to say, the above structure is merely one example of preferred structures, the orientation of the wall surface 26 is not limited to the right side, and the orientation and angle of the wall surface 26 may be altered as appropriate depending on the intended use or the structure.

The cutting insert 10 having the above structure of the present embodiment, as well as the cutting tool 1 having such cutting insert 10, are particularly suitable for groove machining, and when outer diameter machining of the workpiece 100 is performed, the chip discharge groove 25 that has the wall surface 26 located at a position higher than the upper surface 30u of the cutting edge member 30 guides and discharges the chips 101 in a direction different from the axial direction of the longitudinal reference axis of the base insert 20, so that the chips 101 are not entangled with the workpiece 100. Furthermore, chips may go over a chip breaker, particularly when high-feed machining is performed, and the discharging direction of chips may become unstable. In such case, chips may become entangled with a workpiece or a machine tool, and attempts to remove such entangled chips may decrease production efficiency. However, the cutting insert 10 or the cutting tool 1 of the present embodiment contributes to achieving: stable chip control even in high-feed machining; and improvements in the flexibility of feeding during cutting, and thereby achieves improvements in production efficiency. According to the cutting insert 10 and the cutting tool 1 expected to provide such effects, it is possible to expect improvements in the quality of the machined surface, which can be considered particularly remarkable in the case where a workpiece 100 having a high malleability, such as an aluminum material, is a target to be cut.

In addition, in a cutting insert in which an ultrahigh-pressure sintered body is employed for a cutting edge member, it can be said that, due to the technical aspect in which an upper surface of the ultrahigh-pressure sintered body has been removed and machined in order to form a chip breaker, the chip breaker cannot be provided at a position higher than such upper surface. In this regard, in the cutting insert 10 and the cutting tool 1 comprising such cutting insert 10 according to the present embodiment, the chip discharge groove 25 having the wall surface 26 which is located at a position higher than the upper surface 30u of the cutting edge member 30 guides the chips 101 in a direction different from the axial direction of the longitudinal reference axis, so that the chips 101 will not become entangled with the workpiece 100, as described above.

### [Second Embodiment]

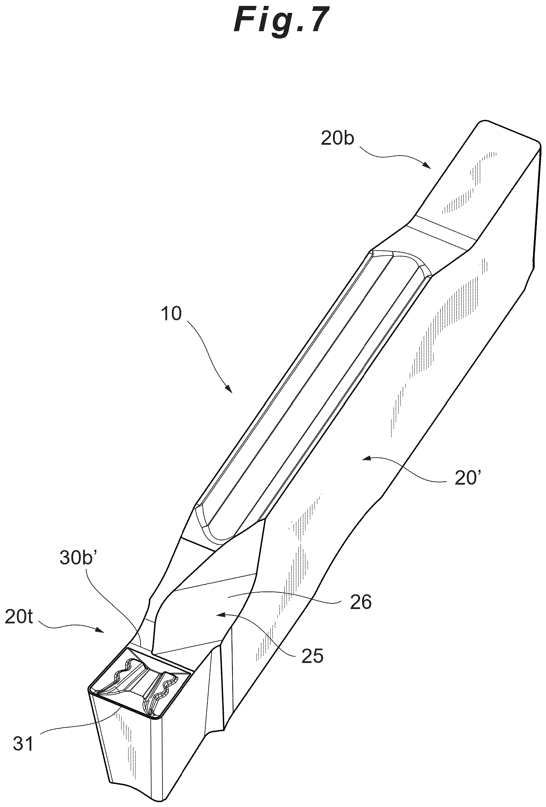

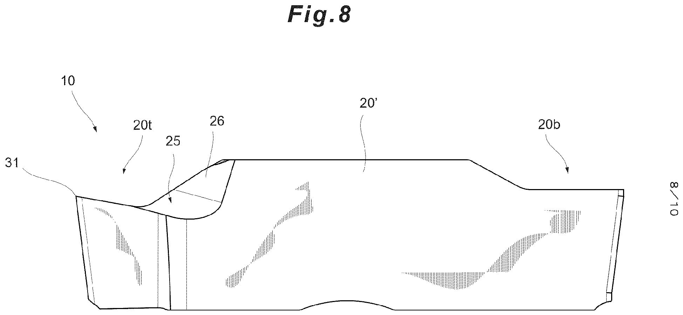

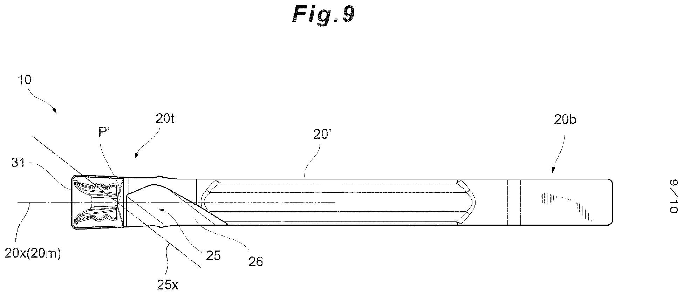

A cutting tool 1 according to the present embodiment includes a cutting insert 10 and a tool holder 50 that holds the cutting insert 10 (see Figs. 7-9). The cutting insert 10 has a configuration in which a front cutting edge 31 is formed in an integral manner on a leading end part 20t of a substrate 20' that is made of a superalloy and has a structure in which a cutting part and a holding part are formed in an integral manner. One or both side parts of the leading end part 20t on which the front cutting edge 31 is formed may be provided with a side cutting edge 32.

In this way, in the case of employing the cutting insert 10 in which a portion extending from a base end part 20b of the substrate 20' to the front cutting edge 31 on the leading end part 20t is formed of a single material (a superalloy in the case of the present embodiment) in an integral manner, the cutting insert 10 having a cutting edge can be formed by only going through, for example, a press molding process, and without needing to go through a process for brazing a cutting edge member made of an ultrahigh-pressure sintered body onto a base insert.

The shape of the portion of the leading end part 20t that includes the front cutting edge 31 is not particularly limited; however, in the present embodiment, such portion has a similar shape to that of the cutting edge member 30 in the first embodiment, and a portion 30b' corresponding to the base end-side portion 30b and a section P' corresponding to the intersection P (being an intersection between the central axis 20x of the substrate 20' and the center line 25A of the chip discharge groove 25) are also formed (see Figs. 7-9).

The substrate 20' is provided with the chip discharge groove 25 (see Figs. 7-9). In the present embodiment, the chip discharge groove 25 which is the same as that of the first embodiment is provided, and such chip discharge groove 25 securely discharge chips 101 that are generated during a cutting process in a direction that does not cause the chips 101 to be entangled with the workpiece 100 in the same way as the configuration described above. The chips 101 that have been curled by the recessed part are then guided by the wall surface 26 of the chip discharge groove 25 so as to change its flowing direction, and are then discharged (see Figs. 7-9).

In the cutting tool 1 according to the present embodiment, the chip discharge groove 25 that includes the wall surface 26 located at a position higher than the front cutting edge 31 can securely guide and discharge the chips 101 in a direction different from the axial direction of the longitudinal reference axis 20x, so that the chips 101 will not be entangled with the workpiece 100.

Although preferred embodiments of the present invention have been described above, the present invention is not limited to the described examples and may be modified in various ways without departing from the spirit of the present invention. For example, although the wall surface 26 forming the chip discharge groove 25 has (a part of) a substantially cylindrical shape in the cutting insert 10 of the above-described embodiment (see Figs. 4 and 5), such configuration is merely an example of a preferred embodiment. As other examples, the wall surface 26 forming the chip discharge groove 25 may be constituted only by a curved surface, or only part of the wall surface 26 forming the chip discharge groove 25 may be constituted only by a curved surface. The specific example of the latter may include the wall surface 26 constituted by a combination of a curved surface and a flat surface.

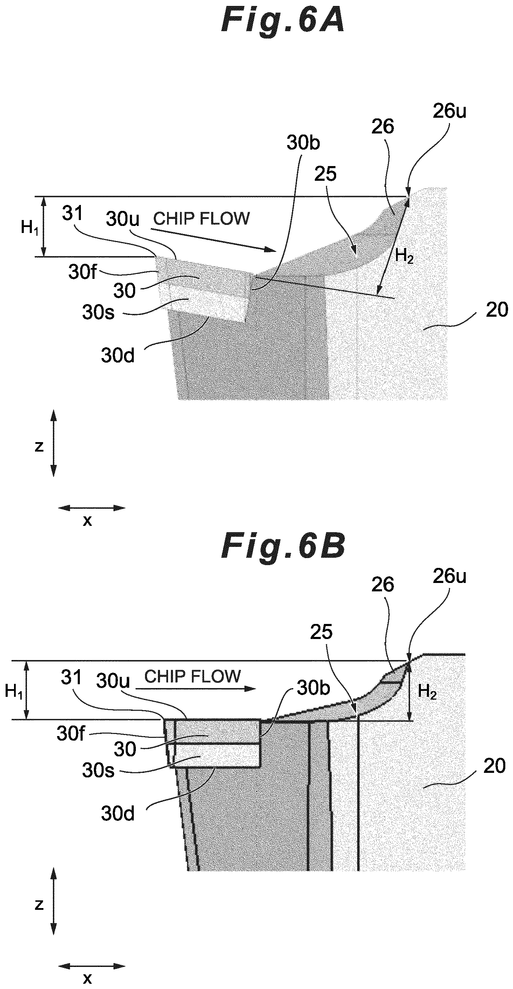

Although not particularly mentioned in the embodiments described above, the cutting edge member 30 may be joined to the base insert 20 such that the cutting edge member 30 is inclined with the base end part side (on the side where the base end-side portion 30b is located) descended with respect to the leading end side (i.e., the side where the front surface 30f is located) (see Fig. 6). In such case, since the base end-side portion 30b of the cutting edge member 30 is located at a deeper (lower) position, the height H₂ (e.g., about 1 mm) corresponding to the distance between a virtual extension of the upper surface 30u of the base end-side portion 30b and an upper end (denoted by reference symbol 26u in Fig. 6) of the wall surface 26 is relatively larger than the height H₁ from the cutting edge 31 to the upper end 26u of the wall surface 26 along the vertical direction z (see Figs. 6A and 6B). In addition, it becomes easier to arrange the cutting edge member 30 in a posture in which the rake angle of the front cutting edge 31 is a positive value. While the chips 101 in the configuration in which no rake angle is provided are caused to flow substantially horizontally along the upper surface 30u (see Fig. 6B), in the configuration in which the cutting edge member 30 is inclined so that the side where the base end-side portion 30b is located is descended as described above, the chips 101 can be drawn more deeply, whereby the height of the wall surface 26u becomes relatively high and the chips 101 can be prevented from going over the wall. In this way, the higher the wall is, the more easily the force for controlling the chips 101 can be enhanced, which contributes to further improvements in the discharge and control of chips 101 (see Fig. 6A).

The cutting insert 10 described in the above embodiments is suitable for use as an insert for grooving tools; however, in a strict sense, the cutting insert is capable of improving the chip control and the quality of machined surfaces, irrespective of the use and shape of the insert, and the intended use thereof is not particularly limited.

As modifications for the cutting insert 10 described above, the depth of the recessed part 33 may further be increased, within the range of the thickness of the ultrahigh-pressure sintered body that constitutes the cutting edge member 30, to thereby increase the rake angle, or the chip breaker may be provided in the recessed part 33.

Although the chip discharge groove 25 extending along the central axis 25x has been described, while referring to the drawing that shows the case where the central axis 25x is straight, in the embodiments described above (see Fig. 5), this is also merely a preferred example. Although not particularly shown, the chip discharge groove 25 may extend along a curved (virtual) central axis 25x, or may extend so as to be screwed along a straight or curved central axis 25x.

Although the cutting insert 10 according to the embodiments of the present invention has been described above, various alterations may be made thereto. For example, the cutting edge member 30 of the cutting insert 10 may be formed of an ultrahigh-pressure sintered body such as a diamond sintered body or a cubic boron nitride sintered body or of a material obtained by coating the hard material or the ultrahigh-pressure sintered body with a coating of any one selected from the group consisting of a carbide, a nitride, an oxide, a carbonitride, an oxycarbide, a carbon oxynitride, a boron nitride, and a boron carbon oxynitride of periodic table 4A, 5A, and 6A group metals, aluminum oxide, and titanium aluminum nitride, or with an amorphous carbon thin film or the like, by a CVD method, a PVD method, or the like.

Although the cutting insert 10 which is fed in the longitudinal direction x and thus suitable for groove machining has been described in the embodiment above, such configuration is also merely a preferred example. The present invention may be applied for the purpose of other turning processes, without being limited to parting or groove machining, by appropriately changing the shape of the cutting edge. It is also possible to apply the cutting insert 10 suitable for grooving to milling machining (slot milling cutter), etc.

Although the cutting tool 1 that includes the cutting insert 10 in which the cutting edge member 30 made of an ultrahigh-pressure sintered body having a higher hardness than the base insert 20 made of a superalloy is joined to such base insert 20 by brazing has been described in the embodiment above, such configuration is also merely a preferred example. For example, the present invention may be applied to a cutting tool 1 having a configuration in which a sintered body is directly brazed to a tool made of steel, without using a cutting insert. It should be noted that, if the base insert (base member) 20 is made of steel, it is more preferable for the cutting edge member 30 to be made of an ultrahigh-pressure sintered body, although it is possible to use cemented carbide. When the cutting edge member 30 is made of a cemented carbide, a structure wherein a shank part is made of steel, etc. and the cutting edge member made of the cemented carbide is brazed onto such shank part may be employed as a cutting tool.

### [Examples]

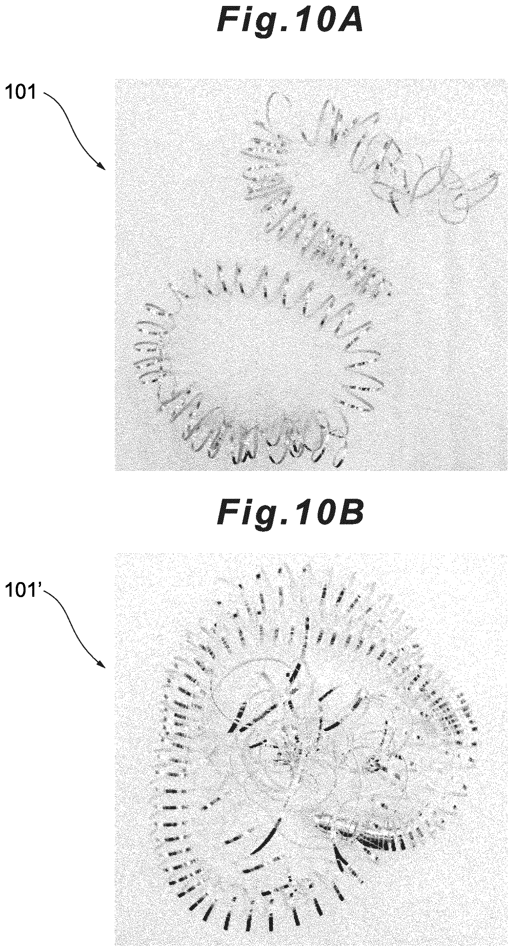

Chips 101 generated when groove machining was performed using the cutting insert 10 described above have been studied in comparison with those generated when a cutting insert having no chip discharge groove was used as a comparative example (see Fig. 10A). The chips 101 generated when groove machining was performed using the cutting insert 10 of the present embodiment have been confirmed to have a clear spiral shape as shown in the drawing (see Fig. 10A), without becoming entangled with the tool holder 50. On the other hand, the chips 101' generated when a cutting insert provided with no chip discharge groove was used have been confirmed to have become entangled with a tool holder, etc., resulting in the state shown in the drawing (see Fig. 10B).

The present invention is suitable for use in cutting tools.

## Claims

1. A cutting tool, comprising:
an upper surface, a flank, and a cutting edge formed on an edge between the upper surface and the flank, the cutting tool having a shape extending in a longitudinal direction along a longitudinal reference axis from a base end part to a leading end part, the cutting tool having the cutting edge member at the leading end part,
wherein the cutting tool is provided with a chip discharge groove that is constituted by a wall surface at least part of which is curved and at least part of which is located at a position higher than the cutting edge, the chip discharge groove having a shape extending in a direction different from an axial direction of the longitudinal reference axis.

2. The cutting tool according to claim 1, wherein a virtual center line passing through a center of the chip discharge groove is inclined with respect to the longitudinal reference axis in a plan view where the chip discharge groove is viewed in a direction perpendicular to the longitudinal reference axis from a side of the upper surface.

3. The cutting tool according to claim 2, wherein an intersection between the virtual center line passing through the center of the chip discharge groove and the longitudinal reference axis is located on a base end part side with respect to the cutting edge in the plan view where the chip discharge groove is viewed in the direction perpendicular to the longitudinal reference axis from the side of the upper surface.

4. The cutting tool according to any one of claims 1 to 3, wherein the chip discharge groove is bilaterally asymmetric with respect to the longitudinal reference axis in a plan view where the chip discharge groove is viewed in a direction perpendicular to the longitudinal reference axis from a side of the upper surface.

5. The cutting tool according to any one of claims 1 to 4, wherein the chip discharge groove is formed so as to span a center in a width direction of the cutting tool in a plan view where the chip discharge groove is viewed in a direction perpendicular to the longitudinal reference axis from a side of the upper surface.

6. The cutting tool according to any one of claims 1 to 5, wherein the wall surface that forms the chip discharge groove is constituted only by a curved surface.

7. The cutting tool according to any one of claims 1 to 6, wherein at least part of the wall surface that forms the chip discharge groove is constituted by a cylindrical surface.

8. The cutting tool according to any one of claims 1 to 7, wherein the wall surface that forms the chip discharge groove is constituted by a cylindrical surface.

9. A cutting tool, comprising:
a cutting edge member having a first end surface, a second end surface that opposes the first end surface, a flank, and a cutting edge formed on an edge between the first end surface and the flank; and
a base member having a shape extending in a longitudinal direction along a longitudinal reference axis from a base end part to a leading end part, wherein the cutting edge member is joined to the leading end part,
wherein the base member is provided with a chip discharge groove that is constituted by a wall surface at least part of which is curved and at least part of which is located at a position higher than the first end surface, the chip discharge groove having a shape extending in a direction different from an axial direction of the longitudinal reference axis of the base member.

10. The cutting tool according to claim 9, wherein a starting end of the chip discharge groove is arranged on a base end-side portion of the cutting edge member.

11. The cutting tool according to claim 9 or 10, wherein the chip discharge groove is bilaterally asymmetric with respect to the longitudinal reference axis of the base member in a plan view where the chip discharge groove is viewed in a direction perpendicular to the longitudinal reference axis from a side of the first end surface.

12. The cutting tool according to claim 11, wherein the chip discharge groove is formed so as to span a center in a width direction of the base member in the plan view where the chip discharge groove is viewed in the direction perpendicular to the longitudinal reference axis from the side of the first end surface.

13. The cutting tool according to any one of claims 9 to 12, wherein an intersection between a virtual center line passing through a center of the chip discharge groove and the longitudinal reference axis is located on a leading end part side with respect to a base end-side portion of the cutting edge member in a plan view where the chip discharge groove is viewed in a direction perpendicular to the longitudinal reference axis from the side of the first end surface.

14. The cutting tool according to any one of claims 9 to 13, wherein the cutting edge member is joined to the base member such that the cutting edge member is inclined with a base end side thereof descended with respect to a leading end side thereof.

15. The cutting tool according to any one of claims 9 to 14, wherein the cutting edge member is an ultrahigh-pressure sintered body.
